# EUROPEAN PATENT SPECIFICATION

(11) **EP 2 070 974 B1**
(45) Date of publication and mention of the grant of the patent: **12.02.2014**
(21) Application number: 08253912.3
(22) Date of filing: 08.12.2008
(51) Int. Cl.: B32B 5/22, B32B 5/28, B32B 27/04, C08J 5/10, C08J 5/24, B32B 17/02, B29C 70/02, B64C 1/12

(54) **Metal impregnated composites and methods of making**
Metallimprägnierte Verbundwerkstoffe und Verfharen zu ihrer Herstellung
Composites imprégnés de métal et méthode pour les fabriquer

(30) Priority: 10.12.2007 US 953265
(43) Date of publication of application: 17.06.2009
(73) Proprietor: The Boeing Company, Chicago, IL 60606-2016 (US)
(72) Inventor: Ganguli, Rahul, Agoura Hills, CA 91301 (US); Mehrotra, Vivek, Simi Valley, CA 93063 (US); Cox, Brian N., Thousands Oaks, CA 91360 (US)
(74) Representative: Boult Wade Tennant

(56) References cited:
- WO-A1-2006/017283
- WO-A1-2008/056123
- WO-A1-2008/101731
- US-A- 5 853 882
- US-A1- 2002 039 667
- US-B1- 6 673 452
- DATABASE WPI Week 197723 Thomson Scientific, London, GB; AN 1977-40970Y XP002628026, & JP 52 053970 A (TORAY IND INC) 30 April 1977 (1977-04-30)

## Description

### TECHNICAL FIELD

The present invention relates generally to composite materials. More particularly, the present invention relates to composite materials impregnated with metallic particulates.

### BACKGROUND

There is a growing interest in composite materials for a wide variety of applications due to their light weight, high strength properties relative to metals. Composites can be engineered through appropriate selection of composite components, such as the reinforcing component and the resin component, to produce engineered materials with desired properties. In general, the reinforcing materials of composites are not good thermal or electrical conductors. Likewise, the resin components are also not good electrical or thermal conductors.

Composites now find increasing application as "skin panels," for example, in aircraft and in automobiles, where light weight and strength are desirable factors. In aircraft, in particular, the substitution of light weight, high strength composites that meet aircraft specifications for metals generally results in reduced aircraft weight. As a consequence of the weight reduction, aircraft payload may be increased and/or fuel consumption may be reduced. Fuel consumption and payload are perhaps the two most fundamental factors in the economics of air transport.

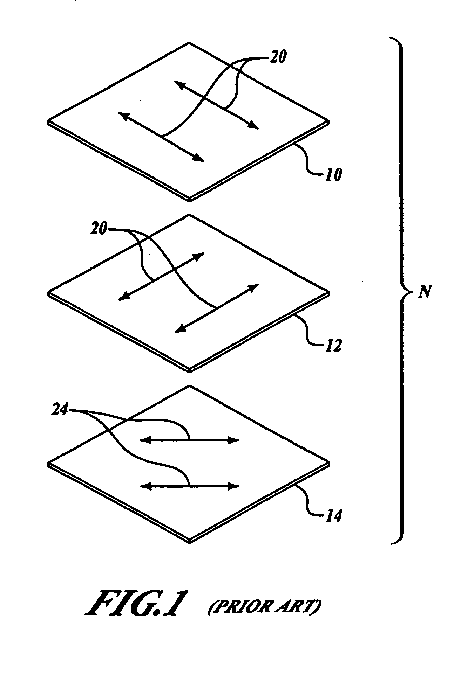

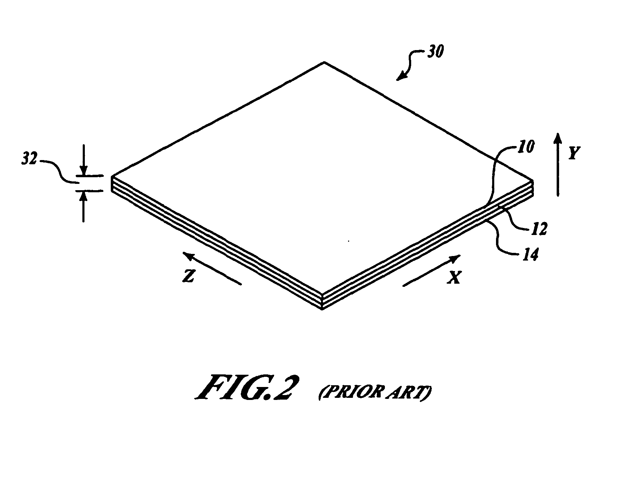

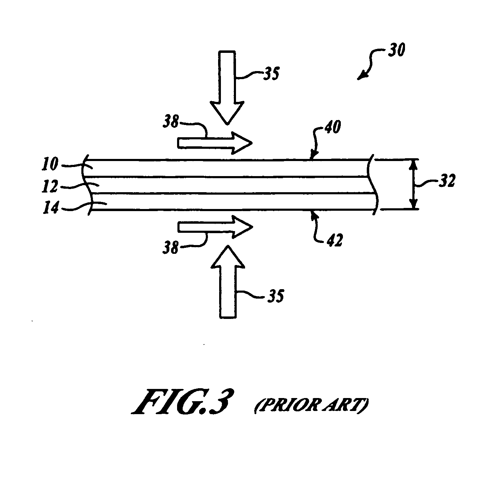

Composites do, however, have some limitations imposed by their very nature. For example, laminated composites that comprise layers of composite [referred to as "prepregs" when impregnated with a resin] consolidated together, may become delaminated. This may become more apparent when considering FIG. 1, which shows an example of lay-up for a composite panel. A series of "prepregs" 10, 12, 14, which are sheets of composite material impregnated with an organic polymer, are stacked in a press for consolidation under heat and pressure. While only three prepregs are shown, clearly the number N of prepregs can be varied. In the example, the orientation of the length dimension of the reinforcing material (which may be fibers) in each prepreg is shown by double-headed arrows 20, 22 and 24. Delamination occurs when separation occurs between layers of the consolidated laminate 30 illustrated in FIG. 2, such as between layer 10 and 12, for example, causing a gap within the laminated structure. The delamination may grow in extent over time to become so severe that the composite has to be replaced. Further, composites, because of the properties of their reinforcing and polymer components, generally have poor thermal conductivity. This is especially so in a direction perpendicular to the length of the reinforcing component, i.e. through a thickness 32 of the composite 30, as shown by arrows 35 in FIG. 3. This direction is often referred to as the "through-composite thermal conductivity," as opposed to the "along the composite thermal conductivity," shown by arrows 38. In addition, composites also have generally poor through-electrical conductivity.

Accordingly, it is desirable to provide composite materials with improved through-composite thermal and though-composite electrical conductivity. In addition, it is desirable that these composite materials have improved resistance to delamination. Furthermore, other desirable features and characteristics of the present invention will become apparent from the subsequent detailed description and the appended claims, taken in conjunction with the accompanying drawings and the foregoing technical field and background.

WO 2008/101731 A1 discloses a production method for molded articles made of fiber composites. Strip-shaped starting materials comprising reinforcement fibers and a thermoset or thermoplastic resin is continuously pushed or pulled forward.

### BRIEF SUMMARY

Exemplary embodiments provide methods of making a metal-impregnated composite material. The methods may include selecting plies comprised of a reinforcing material that has tightly packed reinforcing fibers with discontinuous inter-fiber spaces. Polymer and metal particulates are applied to the plies. The polymer and metal particulate-containing plies are concurrently subjected to (1) a magnetic field oriented to facilitate urging the metal particulates into the plies and (2) to vibration forces. Thereafter, the polymer and metal particulate-containing plies are consolidated under heat and pressure.

The step of applying the polymer and metal particulates may comprise applying a polymer fluid laden with metal particulates, in particular nano-scale sized metal particulates. The step of applying may further comprise applying a polymer fluid laden with nano-scale sized nickel or nickel alloy particulates, and wherein the step of concurrently subjecting to a magnetic field and to vibration forces comprises concurrently subjecting to a magnetic filed having a strength in a range from 200 to 30,000 and to vibration forces via an ultrasonicator in an applied power range from 5 W/ liter to 750 W/ liter.

The step of concurrently subjecting to a magnetic field and to vibration forces may comprise concurrently subjecting to a magnetic filed having a strength in a range from 20 Gauss to 100,000 Gauss.

The step of concurrently subjecting to a magnetic filed may comprise concurrently subjecting to a magnetic field having a strength in a range from 200 Gauss to 30,000 Gauss, and periodically cycling the magnetic field on and off, after which the metal-impregnated composite material may be machined to produce aircraft panels.

### BRIEF DESCRIPTION OF THE DRAWINGS

Various embodiments will hereinafter be described in conjunction with the following drawing figures, wherein like numerals denote like elements throughout the figures.
FIG. 1 is an illustration in perspective view of a prior art lay-up for a composite panel;
FIG. 2 is an illustration in perspective view of a prior art composite panel;
FIG. 3 is an end view of a portion of a cross section through the panel of FIG. 2; and
FIG. 4 is a block diagram illustrating process steps in accordance with an exemplary embodiment for making a metal-impregnated composite material.

### DETAILED DESCRIPTION

The following detailed description is merely exemplary in nature and is not intended to limit the described embodiments or the application and uses of the described embodiments. Furthermore, there is no intention to be bound by any expressed or implied theory presented in the preceding technical field, background, brief summary or the following detailed description.

While the following will, for the sake of brevity, discuss mainly composite panels made up of several layers, the technology disclosed and described apply as well to other composite material structures.

As explained above, composite materials generally have poor thermal conductivity in a direction "through the composite" as illustrated by arrows 35 in FIG. 3. When such a composite is exposed to higher temperatures on one face 40 than the opposite face 42, and heat transfer through the composite is slow and inefficient, then face 40 will have a higher temperature than face 42. Consequently, heat-induced expansion will cause greater dimensional changes at and near face 40 than at or near face 42. Conversely, if face 40 is later exposed to cold conditions, temperature-induced contraction at and near face 40 will be greater than at or near face 42. It is theorized without being bound that the differential expansion effect may contribute to delamination of the layered composite. Accordingly, improving the through-composite thermal conductivity coefficient may be expected to reduce the tendency of a composite to delaminate.

In accordance with an exemplary embodiment, fine metal particulates are introduced into composite materials during the manufacturing process to produce a composite that has an improved through-composite thermal conductivity coefficient. In general, the through-composite thermal conductivity coefficient improves significantly, by an order of magnitude or more. Improvement in thermal conductivity coefficient depends upon a variety of factors, including the fiber volume fraction and the type of fiber. Accordingly, the range of improvement may vary widely from one composite to another type of composite. Nonetheless, assuming that a composite with a fiber volume fraction of 45-55%, and a typical non graphitic pitch-based carbon fiber, then without metallic particle inclusion the composite may have a thermal conductivity coefficient of about 0.1-0.2 W/mK. With metallic particle inclusion, the thermal conductivity coefficient would be expected to be in the range from about 0.5 to about 1.0 W/mK.

In composite plies the reinforcing fibers may be selected from a variety of materials commercially available reinforcing fibers, such as carbon fiber, fiber glass, and the like, without limitation. In general, these reinforcing fibers are tightly packed together so that adjacent fibers are in contact with each other along major portions of their respective fiber lengths. While a ply might have a volume percent of fiber of 60%, reflecting 40% void space, the inter-fiber spaces between reinforcing fibers are nonetheless small and discontinuous through the thickness of the ply.

Typically, during composite consolidation, the polymer component penetrates between fibers in the ply by flowing under the heat and pressure that is applied to consolidate multiple plies into a laminated composite structure. Insertion of fine solids into the interstitial spaces between fibers is much more difficult than insertion of a fluid like molten polymer because fine particulates do not flow like a molten polymer under pressure. Attempts at adding fine particulates to the polymer or otherwise trying to use polymer flow to carry particulates into the interstitial spaces have not proven useful. More often than not, the particulates remain as a residue on or near the consolidated composite's surface.

Organic polymers may be selected from a wide variety that provide the composite with desired properties and that are compatible with the reinforcing material. Commonly used organic polymers include the phenolic polymers, epoxy polymers, and the like without limitation.

According to an exemplary embodiment, external forces are applied during composite manufacture to urge or draw down metal particulates into the spaces between plies. These forces include a combination of magnetic forces and physical vibration forces applied concurrently to the substrate to which the metal particulates have been added. In this embodiment, the metal particulates may be selected from any metal that has both a susceptibility to magnetism as well as a coefficient of thermal conductivity suitable for achieving the desired through-composite thermal conductivity in the composite at the metal particle dose amount. Since many magnetism-susceptible metals tend to be electrically conductive, at least much more so than composite materials, the addition of metal particulates also significantly improves the through-composite electrical conductivity of the composite.

The metal particulates may be selected from the magnetism susceptible metals such as nickel, nickel alloys, iron and alloys of iron (steels), cobalt, cobalt alloys, and the like without limitation. The particles may also be more thermally conductive composite materials, comprised for example, of particles that have a metallic layer over an inorganic particle, and the like without limitation. In addition the metal particulates are desirably fine to facilitate infiltration into inter-fiber spaces in plies. In one embodiment, where the plies are carbon fiber the metal particulates may be nickel, sized in the range from about 1 nm to about 100 microns. Particles of particular utility have high aspect ratio, such as nickel nanorods. Typical nickel nanorods have a diameter of 25 - 250 nm and length of 10 - 100 microns. High aspect ratio enables a large increase in thermal conduction for a small volume fraction of the particles. For example, 20 volume % of 3 micron diameter nickel particles in the polymer phase result in the same increase in thermal conductivity as 2 volume % of nickel nanorods. Of course, depending upon the specific distribution of inter-fiber space size, other sizes of metal particulates that fit within the inter-fiber spaces are also useful. For ease of infiltration into inter-fiber spaces and distribution of metal particulates throughout the consolidated composite, the metal particulates may be in the nano-scale size range, but larger sizes may be also be useful. These sizes range from about 1 nm to about 1 micron. A commercial example of such a nano-sized metallic powder is HTA-1™ nickel nanoplatelets manufactured by Inconel Inc., which is nano-sized nickel.

The strength of the magnetic field applied to draw the metal particulates into inter-fiber spaces will vary depending upon the susceptibility of the metal to magnetism. For example, for nano-sized nickel particulates, the field strength may be in the range about 20 Gauss to about 100,000 Gauss, more typically about 200 Gauss to about 300,000 Gauss. The field strength may be adjusted as necessary to account for the particular metal, ply density, inter-fiber space size, and the viscosity of the molten polymer during consolidation processing, and other factors that influence particle mobility into the pre-consolidated lay-up.

It is theorized without being bound that while the magnetic field provides an urging force on metal particulates pulling them into the inter-fiber spaces, the concurrently applied vibration forces cause particle mobility that facilitate entry into inter-fiber spaces. The vibration is typically applied using a ultrasonic bath or ultrasonic horns. The amplitude of this vibration may be specified by the volume specific power input of the ultrasonicator. Typically the applied power is in the range from about 5 W/ liter to about 750 W/ liter.

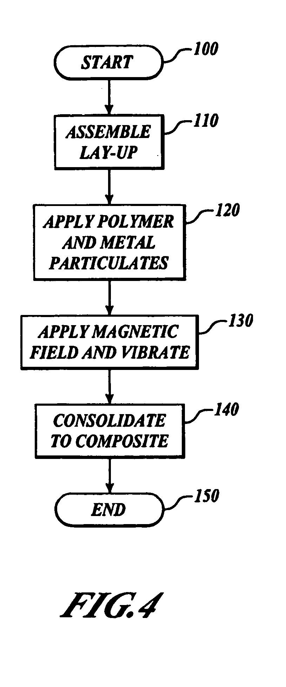

Referring to FIG. 4, an example embodiment of the process of making metal-impregnated laminated composites commences at block 100, with selection of the appropriate materials. These include the plies, the polymer, and the metal particulates that will be used. The plies are assembled in a lay-up in step 110. In the lay-up, orientation of fibers in one ply might differ from that of adjacent plies, according to appropriate engineering design. In addition, plies may be pre-impregnated with polymer or may be polymer-free. If the plies are free of polymer, then in step 120, metal particulate-laden polymer mixture is applied to the plies. Application may be via any of a variety of means including painting plies with the mixture, spraying plies with the mixture, or immersing plies in the mixture. Alternatively, the polymer may be applied as a first step, and the metal particulates may be evenly distributed over the polymer-wetted plies.

After application of polymer and particulates, a magnetic field and vibration forces are applied in step 130. When magnetic and vibration forces have been applied for a time sufficient to distribute metal particulates substantially throughout the lay-up, the lay-up is consolidated under heat and pressure in step 140. Generally, the magnetic field and vibration forces of step 130 are applied for about 5 minutes to about 4 hours to achieve good distribution of metal particulates. The consolidation step 140 is not significantly different from consolidation of a composite without metal particulate impregnation. The fastest infiltration of particulates is achieved by periodically turning the magnetic field off, and keeping the sonication continuously on. The magnetic field may cause aggregation of the magnetic particles in addition to forcing the particles into the plies. To the extent the magnetic field causes aggregation of particles, these aggregates are not readily infiltrated into the plies due to size. Turning the magnetic field off while maintaining sonication, allows aggregated particles to disperse, and the dispersed particles to infiltrate in the following cycle when the magnetic field is turned back on. Typically the magnetic field is kept on for 5 minutes and turned off for 5 minutes.

After consolidation, the process ends in step 150 with the consolidated composite being subjected to the usual post-consolidation processes such as, removal of flash, inspection for surface defects, and others known in the art.

The metal-particulate impregnated composites may be machined much like other composites lacking metal particulates. The metal particulates generally will not result in significantly increased tool wear.

While at least one exemplary embodiment has been presented in the foregoing detailed description, it should be appreciated that a large number of variations exist. It should also be appreciated that the exemplary embodiment or exemplary embodiments are only examples, and are not intended to limit the scope, applicability, or configuration of the described embodiments in any way. Rather, the foregoing detailed description will provide those skilled in the art with a convenient road map for implementing the exemplary embodiment or exemplary embodiments. It should be understood that various changes can be made in the function and arrangement of elements without departing from the scope as set forth in the appended claims and the legal equivalents thereof.

## Claims

1. A method of making a metal-impregnated composite material, the method comprising:
selecting plies comprised of a reinforcing material, the reinforcing material having tightly packed reinforcing fibers with discontinuous inter-fiber spaces;
applying a polymer and metal particulates to the plies;
concurrently subjecting the polymer and metal particulate-containing plies to a magnetic field oriented to facilitate urging the metal particulates into the plies and to vibration forces; and
consolidating the polymer and metal particulate-containing plies under heat and pressure.

2. The method of Claim 1, wherein the applying of the polymer and metal particulates comprises applying a polymer fluid laden with metal particulates.

3. The method of Claim 2, wherein the applying comprises applying a polymer fluid laden with nano-scale sized metal particulates.

4. The method of Claim 1, wherein the step of concurrently subjecting to a magnetic field and to vibration forces comprises concurrently subjecting to a magnetic field having a strength in a range from 20 Gauss to 100,000 Gauss.

5. The method of Claim 3, wherein the applying comprises applying a polymer fluid laden with nano-scale sized nickel or nickel alloy particulates, and wherein the step of concurrently subjecting to a magnetic field and to vibration forces comprises concurrently subjecting to a magnetic field having a strength in a range from 200 to 30,000 and to vibration forces via an ultrasonicator in an applied power range from 5 W/ liter to 750 W/liter.

6. The method of Claim 1, wherein the step of concurrently subjecting to a magnetic field comprises concurrently subjecting to a magnetic field having a strength in a range from 200 Gauss to 30,000 Gauss, and periodically cycling the magnetic field on and off.

7. The method of Claim 6, further comprising after the step of consolidating, machining to produce aircraft panels.

## Patentansprüche

1. Verfahren zur Herstellung eines metallimprägnierten Verbundmaterials, wobei das Verfahren umfasst:
aus einem Verstärkungsmaterial bestehende Lagen auszuwählen, wobei das Verstärkungsmaterial dicht gepackte Verstärkungsfasern mit diskontinuierlichen Abständen zwischen den Fasern aufweist;
ein Polymer und Metallpartikel auf die Lagen aufzubringen;
die das Polymer und die Metallpartikel enthaltenden Lagen simultan einem Magnetfeld, das ausgerichtet ist, um ein Eindringen der Metallpartikel in die Lagen zu erleichtern, und Vibrationskräften auszusetzen; und
die das Polymer und die Metallpartikel enthaltenden Lagen durch Hitze und Druck zu verfestigen.

2. Verfahren nach Anspruch 1, worin das Aufbringen des Polymers und der Metallpartikel ein Aufbringen eines mit Metallpartikeln versetzten Polymerfluids umfasst.

3. Verfahren nach Anspruch 2, worin das Aufbringen ein Aufbringen eines Polymerfluids umfasst, das mit Metallpartikeln einer Größe im Nanometerbereich versetzt ist.

4. Verfahren nach Anspruch 1, worin der Schritt des simultanen Aussetzens gegenüber einem Magnetfeld und Vibrationskräften ein simultanes Aussetzen gegenüber einem Magnetfeld mit einer Stärke im Bereich von 20 bis 100.000 Gauss umfasst.

5. Verfahren nach Anspruch 3, worin das Aufbringen ein Aufbringen eines mit Nickel- oder Nickellegierungspartikeln einer Größe im Nanometerbereich versetzen Polymerfluids umfasst und worin der Schritt zum simultanen Aussetzen gegenüber einem Magnetfeld und Vibrationskräften ein simultanes Aussetzen gegenüber einem Magnetfeld mit einer Stärke im Bereich von 200 bis 30.000 und gegenüber Vibrationskräften mittels eines Ultraschallgeräts in einem applizierten Leistungsbereich von 5 bis 750 W/Liter umfasst.

6. Verfahren nach Anspruch 1, worin der Schritt zum simultanen Aussetzen gegenüber einem Magnetfeld ein simultanes Aussetzen gegenüber einem Magnetfeld mit einer Stärke im Bereich von 200 bis 30.000 Gauss und ein Ein- und Ausschalten des Magnetfeldes in einem periodischen Zyklus umfasst.

7. Verfahren nach Anspruch 6, das ferner nach dem Verfestigungsschritt ein Bearbeiten zur Herstellung von Luftfahrzeugpanelen umfasst.

## Revendications

1. Procédé de fabrication d'un matériau composite imprégné de métal, le procédé comprenant :
sélectionner des couches constituées d'un matériau de renforcement, le matériau de renforcement ayant des fibres de renforcement tassées d'une manière serrée avec des espaces discontinus entre les fibres ;
appliquer un polymère et des particules métalliques aux couches ;
soumettre en même temps le polymère et les couches contenant des particules métalliques à un champ magnétique orienté pour faciliter la sollicitation des particules métalliques dans les couches et à des forces de vibration ; et
consolider le polymère et les couches contenant des particules métalliques sous chaleur et pression.

2. Procédé selon la revendication 1, dans lequel l'application du polymère et des particules métalliques comprend l'application d'un fluide polymère chargé de particules métalliques.

3. Procédé selon la revendication 2, dans lequel l'application comprend l'application d'un fluide polymère chargé en particules métalliques à l'échelle nanométrique.

4. Procédé selon la revendication 1, dans lequel l'étape de la soumission en même temps à un champ magnétique et à des forces de vibration comprend la soumission en même temps à un champ magnétique d'une force dans une plage de 20 Gauss à 100.000 Gauss.

5. Procédé selon la revendication 3, dans lequel l'application comprend l'application d'un fluide polymère chargé en particules de nickel ou d'alliage de nickel à l'échelle nanométrique, et où l'étape de la soumission en même temps à un champ magnétique et à des forces de vibration comprend la soumission en même temps à un champ magnétique d'une force dans une place de 200 à 30.000 et à des forces de vibration via un ultrasonicateur dans une plage de puissance appliquée de 5 W/litre à 750 W/litre.

6. Procédé selon la revendication 1, dans lequel l'étape de la soumission en même temps à un champ magnétique comprend la soumission en même temps à un champ magnétique ayant une force dans une plage de 200 Gauss et 30.000 Gauss, et le cycle périodique du champ magnétique en service et hors service.

7. Procédé selon la revendication 6, comprenant en outre, après l'étape de consolidation, l'usinage pour produire des panneaux d'aéronef.
